# EUROPÄISCHE PATENTSCHRIFT

(11) **EP 2 616 700 B1**
(45) Veröffentlichungstag und Bekanntmachung des Hinweises auf die Patenterteilung: **29.05.2019**
(21) Anmeldenummer: 11757293.3
(22) Anmeldetag: 13.09.2011
(51) Int. Cl.: F16C 33/76

(54) **UMLAUFENDE DICHTUNGSANORDNUNG**
PERIPHERAL SEALING ARRANGEMENT
SYSTÈME DE JOINT PÉRIPHÉRIQUE

(30) Priorität: 17.09.2010 DE 102010046431
(43) Veröffentlichungstag der Anmeldung: 24.07.2013
(73) Patentinhaber: IMO Holding GmbH, 91350 Gremsdorf (DE)
(72) Erfinder: ALBERTSEN, Henrik, 90475 Nürnberg (DE); WILLACZEK, Hermann, 91334 Hemhofen (DE)
(74) Vertreter: Schmidt, Steffen J.
(86) Internationale Anmeldenummer: PCT/EP2011/065867
(87) Internationale Veröffentlichungsnummer: WO 2012/035022

(56) Entgegenhaltungen:
- WO-A1-2010/043249
- DE-A1-102006 053 832

## Beschreibung

Die Erfindung bezieht sich auf eine Lageranordnung aufweisend eine Dichtungsanordnung mit einem bevorzugterweise einteiligen umlaufenden kautschukartigen Dichtungsmaterial zur Abdichtung des Dichtraumes für den Einsatz in einer Drehverbindung gemäß den Patentansprüchen.

Aktuell handelsübliche und im Einsatz befindliche Dichtungen für Drehverbindungen und Großwälzlager, die einen Innenring (IR) und einen Außenring (AU) beinhalten, sind in Ihrer Form und Ausgestaltung sehr unterschiedlich, obwohl der Anwendungsfall oft sehr ähnlich ist. Es geht stets darum, die Drehverbindung, den Schwenktrieb oder allgemein das Großwälzlager oder Wälzlager sicher gegen äußere Einflüsse, beispielsweise Feuchtigkeit, Flugsand oder Verunreinigungen beziehungsweise Schmutz, Fremdkörper, et cetera, zu schützen.

Ebenso geht es bei einer praxistauglichen Dichtungsanordnung darum, Widerstandsfähigkeit gegenüber dem Schmiermittelinnendruck im Lager zu gewährleisten. Prinzipiell soll die Dichtung die Anforderungen erfüllen, Fremdkörper vom Eindringen in die Lagerkonstruktion der Verbindung zu hindern. Gleichzeitig muss die Dichtung Unterstützung dafür bieten, dass das Schmiermittel im Lager verbleibt beziehungsweise nur in geringen und definierten Mengen aus der Gesamtanordnung gelangt. Sie muss also dem Innendruck des Lagers, herbeigeführt durch das Schmiermittel, in vertretbarem Maße standhalten können. Der Fachmann spricht von einer Abdichtwirkung der Dichtung.

Es ist aktuell Stand der Technik, dass in Drehverbindungen, Großwälzlagern und Schwenktrieben Schmierstoffe beziehungsweise Schmiermittel eingesetzt werden, die mit dem Dichtungsmaterial in Kontakt gelangen.

Es ist ebenso aktuell Stand der Technik, dass handelsübliche und im Einsatz befindliche Dichtungen vulkanisierbar sind und herstellbar mit allen gängigen Verfahren zur Herstellung von Dichtungsgeometrien aus elastischen kautschukartigen Werkstoffen, beispielsweise FPM, Viton, NBR, ECO, HNBR und Ähnlichen.

Den üblichen Dichtungsanordnungen nach Stand der Technik ist gemein, dass sie in der Regel entweder einteilig oder mehrteilig ausgeführt sind, das bedeutet aus mindestens einer Dichtungskomponente bestehen.

Sehr häufig werden verschiedene ringförmige Dichtungsstränge in die Drehverbindung eingebracht oder in einem oder in mehreren Einstichen beziehungsweise Nuten im Vollmaterial der Drehverbindung oder an dem Wälzlager befestigt, so dass sich eine Fixierung stattfindet. Die Fixierung geschieht dabei durch Einbringen des elastischen Dichtungsmateriales in eine im (metallischen) Vollmaterial der abzudichtenden Anordnung vorhandene Nut. Häufig entsteht diese Nut durch spanende Bearbeitung infolge des sogenannten "Einstichdrehens" während der Fertigung der Drehverbindung beziehungsweise des Lagers.

Es ist häufig so, dass mehrere solcher Nuten beziehungsweise Einstiche in der abzudichtenden Gesamtanordnung vorhanden sind. Häufig existieren mindestens genauso viele dieser Nuten, wie elastische Dichtungsstränge in die Anordnung eingebracht und fixiert werden sollen.

Die Fixierung der Dichtungsstränge beziehungsweise der Dichtungsprofile in den genannten Nuten oder Einstichen geschieht dabei im Normalfalle zum Einen durch Formschluss, da die elastischen Federn beziehungsweise Lippen des Dichtungsstranges beziehungsweise Dichtungsprofils, die in den Nuten eingebracht werden, häufig widerhakenähnliche Profilgeometrie(n) besitzen, und zum Anderen dadurch, dass eventuell auftretende Verformungskräfte auf die Dichtungen infolge anwendungsgemäßem Betrieb der Drehverbindung stets in etwa senkrecht zur Einbringungsachse der vorgenannten Nut wirken und somit nicht in jener Richtung in welcher die Profilgeometrie(n) des Dichtungsringes aus der genannten Nut oder dem genannten Einstich herausgezogen würde.

Es ist ferner so, dass die genannte Fixierung der Dichtungsanordnung im metallischen Vollmaterial durch Kraftaufwand in der Regel wieder lösbar ist. Das bedeutet durch Aufbringen einer gewissen Zugkraft, die entgegengesetzt der Richtung der Einbringkraft der Dichtung in das Vollmaterial wirken muss, der Praktiker beziehungsweise Fachmann die eingebrachte Dichtung von der metallischen Anordnung (Drehverbindung, Schwenktrieb oder allgemein: Großwälzlager) wieder lösen.

Häufig ist es gemäß dem bekannten Stand der Technik und maßgeblich aufgrund der beschriebenen Tatsache so, dass der Teil des verwendeten Dichtungsprofils, der in eine Nut beziehungsweise in einen Einstich eingebracht werden soll, widerhakenähnlich ausgestaltet ist.

Es ist nach bekanntem Stand der Technik so, dass jede Dichtung zumindest an einer Stelle durch die vorher genannte Art der Fixierung im Vollmaterial der Drehverbindung oder des Großwälzlagers fixiert wird, um während des anwendungsgemäßen Betriebes nicht aus der fixierten Position zu gelangen. Die Abdichtungswirkung ist in der Regel respektabel. Es wird derzeit häufig gesehen, dass ein elastischer Teil der beschriebenen Profilgeometrie(n) der Dichtungsanordnung an dem einen sich drehenden Teil einer Drehverbindung fixiert ist, und ein anderer Teil derselben Dichtungsanordnung an dem anderen sich drehenden Teil einer Drehverbindung fixiert ist, und dass die Dichtungswirkung durch das Zusammenspiel aller an der Gesamtanordnung beteiligten Dichtungskomponenten (das sind beispielsweise eine erste elastische Dichtung, ein zusätzliches Edelstahlband, ein zusätzliches Zugfederband und eine zweite elastische Dichtung, evtl. dritte elastische Dichtungskomponenten) hervorgerufen wird.

So beschreibt beispielsweise die EP 1 920 176 B1, basierend auf der DE 10 2005 041720 A1, eine solche erfolgreiche Anordnung zur Abdichtung einer sich drehenden Verbindung, bei der die Dichtungsanordnung aus vielen Einzelkomponenten besteht, die sich jeweils ringförmig erstrecken und in welcher der Dichtungsring an einem der sich drehenden Teile in oben vorgenannter Weise fixiert ist. Die jeweilige Nut beziehungsweise der jeweilige Einstich zur Fixierung der Dichtung in der Lagerkomponente kann, wie hier gut ersichtlich ist, entweder in gleicher Richtung wie der Dichtungsspalt liegen, oder aber lotrecht zum Dichtungsspalt.

Auch bei der DE 103 09 383 A1 handelt es sich um einen sich ringförmig erstreckenden umlaufenden Dichtungsring, welcher an einem der sich drehenden Teile in oben vorgenannter Weise fixiert ist. In diesem Falle wird der widerhakenförmige Teil in eine Nut beziehungsweise einen Einstich eingedrückt, der lotrecht zum Dichtungsspalt in einem der sich drehenden Lagerkomponenten angeordnet ist. Zur weiteren Fixierung dieser Dichtung in horizontaler Richtung wird bei dieser Lösung ein zweites umlaufendes Element benötigt.

An dieser Stelle genannt sei auch die DE 10 2006 053 832 A1. Es handelt sich um ein einteiliges umlaufendes Dichtungselement, bei dem wie vorgenannt ein Teil der Dichtung in eine Nut beziehungsweise in einen Einstich eingedrückt wird, der lotrecht zum Dichtungsspalt in einem der sich drehenden Lagerkomponenten angeordnet ist.

Gemäß dem aktuellen Stand der Technik sind also Dichtungsanordnungen im Feld sehr oft anzutreffen, bei denen die Einstich oder die Nut entweder in dem abzudichtenden Spalt zwischen beiden gegeneinander verdrehbaren Körpern liegt und zwar so, dass die Nut oder der Einstich lotrecht zum Spalt steht, wie beispielsweise die lagerseitig liegende kleine Spaltdichtung in der DE 10 2005 041 720 A1, die jedoch nicht alleine Dichtungswirkung entfalten kann, sondern aus diesem Grunde nur unterstützend und in Zusammenhang mit weiteren, größeren Dichtungsanordnungen Einsatz findet.

Oder aber es sind laut aktuellen Stand der Technik solche einteiligen umlaufenden Weiterentwicklungen an Dichtungsanordnungen im Feld anzutreffen, bei denen der Einstich oder die Nut in Richtung des Spaltes liegen. Insbesondere behandeln die deutschen Anmeldungen DE 10 2008 025 725 A1 sowie DE 10 2008 027 890 A1 solche Dichtungssysteme, bei denen eine Nut - oder besser - Einstich in gleicher Richtung wie der Spalt liegen. Auch hier sind die jeweils stark asymmetrischen Geometrien der Dichtungsprofile vorhanden, die sich an mehreren Punkten an dem sich drehenden gegenüberliegenden Teil beziehungsweise der sich drehenden gegenüberliegenden Lagerkomponente angelegt.

Sehr markant ist auch das Dokument WO 2010/043249 A1, das ebenfalls eine einteilige umlaufende Dichtungskomponente beschreibt. Es ist auch hier gut zu sehen, dass es einen widerhakenähnlichen Teil gibt, welcher in den in Richtung des Dichtungsspaltes liegenden Einstich eingedrückt wird.

Anhand der Lösungen WO 2010/043249 A1 als auch DE 10 2008 025 725 A1 sowie DE 10 2008 027 890 A1 lässt sich gut erkennen, dass jeweils obere und untere Dichtlippen vorhanden sind, welche an der gegenüberliegenden Lagerkomponente anliegen um dort abzudichten, und die bei einer Verschiebung des Lagers aufeinander zu, beziehungsweise zum Ausgleich eines eventuellen Lagerspiels, sich nach oben beziehungsweise nach unten verformen können, wobei dabei dann die obere Dichtlippe nach oben gedrückt wird, und die untere Dichtlippe nach unten gedrückt wird . Diese obere und untere Dichtlippe übernimmt jedoch in allen Fällen nicht nur eine Dichtwirkung, sondern dient zusätzlich zur Fixierung der jeweiligen Lageranordnung gegen axiales Herausdrücken. Diese Fixierung ist jedoch nur dann vorhanden, wenn das Lagerspiel (also die Spaltgröße zwischen Innenring und Außenring) nicht zu groß wird. Je größer die Spaltgröße wird, umso stärker hängt die Stärke der Fixierung der Dichtung im Einstich davon ab, wie gut die Widerhaken sich im Einstich halten. Dies ist insbesondere dann von Nachteil, wenn der Innendruck im Lager stark ansteigt.

Diesen allen vorgenannten Lösungen ist es gemein, dass sie beispielsweise für die Abdichtung von Drehverbindungen hergenommen werden können, die Ihren Einsatz in Windkraftanlagen finden - beispielsweise zur Abdichtung von Drehverbindungen der Azimutlager, Turmlager, als Rotor-lager oder auch als Lager für die Verstellung der Rotorblätter. Jede andere Form der Anwendung in dem genannten Anwendungsbereich ist jedoch ebenfalls denkbar.

In der Praxis sind in letzter Zeit vermehrt vor allem Profilgeometrie(n) solcher Dichtungsanordnungen gewünscht, die zwischen die beiden sich drehenden Teile eingebracht werden können, eine gute Fixierung besitzen, und eine sehr gute und vor allem nachhaltige Abdichtwirkung erzielen. Ein großes Problem vieler vorgenannter Dichtungsanordnungen ist es, dass ihre an sich gute Dichtungswirkung damit steht und fällt, wie stabil beziehungsweise gut sich die Dichtung in der Einbaulage hält. Viele der heutigen Dichtungssysteme fallen im Betrieb aus, weil bei zu hohem Lagerinnendruck (beispielsweise infolge zuviel Schmiermittel) die Dichtungsanordnung aus der Einbaulage gedrückt wird.

Stets sehr nachteilig ist es in der Praxis, wenn die Dichtungen aus den Drehverbindungen herausfallen, da die Gesamtanlage dadurch ausfällt. Insbesondere fällt der widerhakenförmige Teil der Dichtung gelegentlich beziehungsweise nach Verformung aus dem Einstich der Drehverbindung heraus oder wird infolge zu hohem Schmiermitteldruck axial herausgedrückt. Alle bisher genannten Lösungen sind zwar konzipiert, um viele Jahre Einsatz unter Witterungsbedingungen zu überstehen und dennoch sicher abzudichten. Die Praxiserfahrung zeigt jedoch, dass allesamt bisher genannten Dichtungen keine einfachen Dichtungslösungen darstellen, oder die Dichtungslösungen aufgrund mangelnder Fixierungsmöglichkeiten nach einigen Betriebsdauern die Lagestabilität in der Dichtung verlieren oder schlichtweg aus der Dichtung herausgedrückt werden.

Insbesondere bei mehrteiligen Lösungen sind zusätzliche Komplexitäten in der Montage (dazu mehrere Einzelteile montiert werden müssen) vorhanden. Dies kostet in der Praxis Zeit und Geld.

Im Speziellen sind die letzten drei genannten Technikdokumente WO 2010/043249 A1 als auch DE 10 2008 025 725 A1 sowie DE 10 2008 027 890 A1 in ihrer Geometrie sehr ähnlich und weisen daher das Problem auf, dass sie Gefahr laufen, während des Betriebes ihre Lagestabilität verlieren, das heißt die Dichtungen können infolge zu hohen Verformungen oder infolge zu hohem Innendrucks im Lager, der über den Dichtungsraum beziehungsweise Dichtungsspalt nach Außen geleitet wird, während des Anlagenbetriebes aus dem Lager gedrückt werden. Auch wenn dieser Prozess schleichend geschieht, bedeutet dies nach absehbarer Zeit einen Ausfall der abzudichtenden Drehverbindung beziehungsweise der zugehörigen Gesamtanlage. Auch dies kostet in der Praxis Zeit und Geld.

Bei jenen, einen aktuellen Stand der Technik darstellenden, Dokumenten DE 10 2008 025 725 A1 sowie DE 10 2008 027 890 A1 ist es insbesondere so, dass auf derjenigen Seite des Lagers, auf der die Dichtung in einem Einstich fixiert ist, keine weitere Anordnung vorhanden ist, die die Dichtung gegen axiales Herausdrücken sichert. Angenommen, der Lagerinnendruck infolge Schmiermittel zu hoch, so ist eine Dichtung nach den soeben dargestellten zwei Lösungen lediglich durch die widerhakenförmige Ausbildung der Dichtung im Einstich gegen axiales Herausdrücken gesichert. Dies ist in der Praxis bei Weitem nicht ausreichend, um eine zu-verlässige Lagesicherung der Dichtung zu gewährleisten. Eine solche gewünschte Art der Sicherung ist zwar bei der WO 2010/043249 A1 im Ansatz vorhanden - hier wird von einer Ringnut gesprochen die in ihrer Form an eine im robusten Bauwesen gängige Nut-und-Feder Sicherungsart erinnert - aber auch das reicht bei Weitem nicht aus, um eine zuverlässige Lagesicherung der Dichtung gegen axiales Herausdrücken infolge eines zu hohen Druckes aus Richtung Lagermitte zu gewährleisten.

WO2010/043249 A1 betrifft eine Anordnung gemäß dem Oberbegriff des Patentanspruchs 1.

DE 10 2006 053 832 A zeigt eine ähnliche Anordnung mit einer einzigen, unten befindlichen Dichtlippe.

Was man aus Sicht des Praktikers tatsächlich braucht, ist eine einteilige (weniger Teile bedeutet schnellere Montage, weniger Komplexität, et cetera ...) und um die gesamte Drehverbindung umlaufende Lösungen aus den herkömmlichen Dichtungsmaterialien, gegebenenfalls sogar aus einem magnetisierbaren oder magnetischen Elastomerwerkstoff, der sehr sicher in der Dichtung verbleibt. Insbesondere will der Praktiker eine Dichtungsanordnung, die durch eine entsprechend sinnvolle Ausgestaltung der Geometrie der Lagerkomponente förmlich in der Dichtung stark gehalten wird. Idealerweise wird die Dichtung nicht nur stark gehalten, sondern ist in deren Querschnittsprofil so ausgestaltet, dass sich mit zunehmendem Druck aus Richtung des abzudichtenden Dichtungsraumes, also aus Richtung des Lagerinneren, auch eine zunehmende Gegenkraft wirkt, die dem axialen Herausdrücken entgegenwirkt. Der Praktiker will also eine Dichtungslösung, die sich praktisch an ihrem Ort "festkrallt", wenn der Druck aus dem Lagerinneren sich erhöht und die Dichtung aus dem Lager herauszudrücken droht.

Diese Nachteile betrachtend, gilt es eine möglichst optimale Dichtungsanordnung zu erschaffen, welche bestmögliche Lagestabilität bietet. Oberstes Ziel ist es eine kostengünstige und viel einsetzbare Lösung zu schaffen, die einteilig ist, für die Abdichtung von Wälzlagern, Großwälzlagern, Drehverbindungen, Schwenktrieben, et cetera ... zu schaffen. Insbesondere darf die Dichtung vorzüglich dazu geeignet sein, in Drehverbindungen von Windkraftanlagen eingesetzt zu werden.

Um die vorher genannten Nachteile des aktuellen Stands der Technik zu verringern, und um eine viel einsetzbare Dichtungslösung mit maximaler Lagestabilität zu schaffen, insbesondere entgegen dem Herausdrücken aus dem Lager, bietet sich insbesondere die vorliegende Erfindung an, die wesentliche verbessernde Vorteile und Merkmale besitzt. Die Probleme zu den oben genannten Nachteilen werden durch die im Patentanspruch 1 aufgeführten Merkmale gelöst.

Die Lösung der zum Nachteil gereichenden Probleme gemäß dem herkömmlichen Stand der Technik gelingt insbesondere, wenn die erfindungsgemäße Anordnung oder das Element zur Abdichtung der abzudichtenden Anordnung eine solche Geometrie besitzt, dass selbiges sowohl im Betrieb der Drehverbindung, als auch in Ruhephasen stets selbst und ohne Beteiligung anderer Komponenten an Ort und Stelle integriert in der Gesamtkonstruktion verbleiben kann, also ohne herauszufallen.

Als eine primäre Aufgabe gilt es stets, die abzudichtende Öffnung durch die erfindungsgemäße Anordnung abzudichten. Insbesondere durch eine vorteilhafte Gestaltung einer sogenannten Materialausbuchtung an einem der Lagerkomponenten, beispielsweise am Außenring, in dem die Dichtungsanordnung in einem Einstich fixiert ist, kann dies erreicht werden.

Die erfindungsgemäße Lageranordnung weist eine Dichtunganordnung auf. Sie dient zur Abdichtung des Dichtraumes beziehungsweise des Lagerspaltes und ist insbesondere aus einem einteiligen umlaufenden kautschukartigen Dichtungsmaterial gefertigt. Der Hauptlast einer Druckbelastung aus dem Lager wird von einem lagerseitigen Dichtungsbereich aufgefangen. Die Dichtung ist eingesetzt beispielsweise zwischen Außenring und Innenring einer Drehverbindung, wobei die Lösung gleichermaßen auch in Drehverbindungen eingesetzt werden kann, die aus mehrteiligen Außen- oder Innenringen bestehen. Um in einem Instandsetzungsfall im Feld eine Austauschbarkeit der Dichtung zu gewährleisten, ohne dass man das gesamt Lager aufwändig austauschen muss, kann die Dichtungsanordnung aus dem Einstich, in dem sie befestigt wird, herausgenommen und wieder eingesetzt werden (beispielsweise wird die alte Dichtung durch eine fabrikneue Dichtung ersetzt). Die Dichtungsanordnung ist nicht unwiederbringlich in einer Nut fixiert ist sondern lösbar und wieder austauschbar verbunden, wobei der Techniker dabei von einer form- und kraftschlüssigen Verbindung spricht. Formschlüssig zum Einen durch die Geometrie des Einstichs, kraftschlüssig hingegen durch die widerhakenförmigen Teile des Dichtungsprofils. Der genannte Einstich liegt, wie bereits bekannt, in Richtung des Lagerspaltes, also in einer zur horizontalen Außenfläche der verdrehbaren Lagerkomponente parallelen Fläche.

Das charakteristischste Merkmal der Erfindung ist eine Materialausbuchtung, beispielsweise am Außenring, in dem auch der Einstich eingebracht ist und an dem folglich auch die Dichtungsanordnung sitzt. Diese Materialausbuchtung ist keine sprichwörtliche Ringnut, sondern vielmehr eine in den Dichtraum hineinragende Geometrie, an deren Unterseite, gemeint ist die lagerseitige Unterseite, sich die Dichtungsanordnung so formschlüssig festkrallt, dass sie dem Schmiermitteldruck im Lager in jeder Situation und Einbaulage standhält. Nur dadurch, dass diese Materialausbuchtung in Richtung des Lagermittelpunktes hineinragt und von der Dichtung an der lagerseitigen Unterseite umfasst wird, kann bei hohem Druck im Lager eine Gegenkraft aufgebaut werden, die dem axialen Herausdrücken der Dichtung entgegenwirkt. Dadurch, dass die Dichtung nicht punktförmig, sondern flächig an dieser lagerseitigen Unterseite anliegt, ist der so erzeugbare Gegendruck höher als bei einer rein punktuellen Berührung der Dichtung an der Fläche. (Die so erzeugbare Gegenkraft entspricht dem Produkt aus Druck und dieser Fläche.)

Der oben genannte und erfindungsgemäß gewünschte Effekt des "Festkrallens" ergibt sich vorzüglich vor Allem dann, wenn die genannte Materialausbuchtung, oder allgemeiner gesprochen ein im Lagerspalt liegender Materialhinterschnitt, an dem Lagerteil an dem die Dichtung maßgeblich befestigt ist, dort liegt, wo die Dichtung den maximalen axialen Kräfte entgegenwirken kann. Ergo muss der Materialhinterschnitt oder die Materialausbuchtung im Lagerspalt selbst liegen um die maximale Wirkung zu entfalten. Der Effekt des Festkrallens wäre bei Weitem nicht so gut, wenn der Materialhinterschnitt oder die Materialausbuchtung außerhalb des Lagerspaltes platziert wäre. Der Effekt des Festkrallens wäre erst recht nicht gut, wenn der Materialhinterschnitt oder die Materialausbuchtung an einer Fläche lotrecht zum Lagerspalt, platziert wäre. Der genannte Effekt des "Festkrallens" ist besonders dann hoch, wenn die Materialausbuchtung in Richtung der gegenüberliegenden verdrehbaren Lagerkomponente (die den Lagerspalt auf der Gegenseite begrenzt) hervorspringt.

Die erfindungsgemäße Anordnung wird in ihrer Lage dadurch stabilisiert, dass die Dichtungsanordnung beispielsweise an weitere Flächen des, (gegebenenfalls mehrteiligen) Außenrings sowie des (gegebenenfalls mehrteiligen) Innenrings angelegt wird. Sie besitzt mehrere an der gegenüberliegenden Lagerseite (zum Beispiel also am Innenring) anliegende Dichtlippen, die jedoch besitzt die dieser gegenüberliegenden, zweiten, verdrehbaren Lagerkomponente stets so berühren, dass alle Berührpunkte oder Berührflächen entweder oberhalb der horizontalen Außenfläche der ersten verdrehbaren Lagerkomponente liegen, oder unterhalb der horizontalen Außenfläche dieser ersten verdrehbaren Lagerkomponente (beispielsweise des Außenrings) liegen. Es können dabei wenigstens zwei Dichtlippen vorgesehen sein, die eine unterschiedliche Breite aufweisen. Dadurch kann die Dichtungsanordnung gut an die Geometrie oder die Flächen beispielsweise der zweiten verdrehbaren Lagerkomponente angepasst werden. Vorzugsweise werden die Flächen der gegenüberliegenden, zweiten, verdrehbaren Lagerkomponente im Wesentlichen vollständig berührt.

Durch diese Ausgestaltung wird der Nachteil der im jeweils letztgenannten Stand der Technik erwähnten Dokumente 10 2008 025725 A1 und DE 10 2008 027890 A1 sowie WO 2010/043249 A1 ausgeglichen, nämlich dass die Stärke der Fixierung der Dichtung im Lager wesentlich von der Größe des Lagerspaltes abhängt. Bei der vorliegenden Erfindung ist die Stärke der Erfindung nämlich maßgeblich abhängig von der Fixierungswirkung der umschlossenen Materialausbuchtung.

Um möglichst planare Oberflächen zu gewährleisten wird die erfindungsgemäße Dichtungsgeometrie so an die Form der Lagerkomponente (beispielsweise des Außenrings) angepasst, dass die Oberkante der Dichtungsanordnung in etwa bündig mit der horizontalen Außenfläche (beispielsweise des Außenrings) abschließt, in der die Materialausbuchtung der Dichtungsanordnung vorhanden ist. Als weiteres Merkmal kann die Dichtungsanordnung dann mehrteilig sein, wenn beispielsweise zusätzlich zum einteiligen kautschukartigen Material der Dichtungsanordnung mindestens ein umlaufendes Ringelement in Form eines Zugfederstranges an der Oberkante der Dichtungsanordnung eingebracht wird. Dieser Schritt fördert die Lagestabilität der Dichtungsanordnung zusätzlich. Eine weitere Möglichkeit zur zusätzlichen Fixierung der Dichtungsanordnung bieten zusätzliche Schraub- oder Nietverbindungen, die von oben in die Lagerkomponente (beispielsweise den Außenring) eingebracht werden und zur Niederhaltung der Oberkante der Dichtungsanordnung dienen. Dies wird in der Regel durch mehrere umlaufende Schrauben oder Nieten erreicht, die dort in der Lagerkomponente versenkt werden, wo die Dichtung fixiert werden soll. Beispielsweise kann dann sogar die Nut oder der Einstich (beispielsweise im Außenring) komplett entfallen, wenn die umlaufende Dichtungsanordnung durch Schrauben oder Nieten an der Lagerkomponente fixiert wird. Dann kann gegebenenfalls auch der widerhakenförmige Fixierteil der Dichtungsanordnung entfallen. Diejenigen Flächen oder Kanten der Lagerkomponenten (beispielsweise des Außenrings), in die die Dichtungsanordnung eingebracht wird oder die in unmittelbarer Nähe der Dichtungsanordnung liegen, können nichtmetallisch oder metallisch beschichtet ausgeführt sein können. Eine solche Beschichtung dient beispielsweise dem Korrosionsschutz, dem Oberflächenschutz, dem Schutz gegen Abrasion, dem Schutz gegen mechanische Beschädigung, gegen Verkratzen, et cetera .... Wie man in den nachfolgenden Zeichnungen sehen kann, ist es unerheblich, ob die anderen Flächen oder Kanten, beispielsweise des Außenrings oder die des korrespondierenden (entgegen gelegenen) Innenrings abgeschrägt verlaufen oder stets rechtwinklig sind. Praxisnah sind beispielsweise vor allem schräge Flächen an den Stellen, an denen Dichtlippen der Dichtungsanordnung anliegen oder gegenüber liegen. Schräge Flächen sind auch dort vorteilhaft, wo die Materialausbuchtung beziehungsweise der Materialhinterschnitt an die Dichtung anliegt.

Ein weiteres uns wesentliches Charakteristikum der erfindungsgemäßen Anordnung ist die in etwa "gelenkartige" Ausführung der Dichtungsanordnung, die durch einen in etwa mittigen Verjüngungsbereich realisiert wird. Die Verjüngungsstelle der Dichtung wird dort liegen, wo ober- und unterseitige Aussparungen) des Dichtungsmateriales, man spricht hierbei von abgerundeten "Verformräumen", die Verformung der Dichtungsgeometrie zulassen. In etwa in der Mitte dieses Verjüngungsbereiches liegt der Mittelpunkt des Verjüngungsbereiches. Bei Auftreten von radialen Lageveränderungen der gegeneinander verdrehbaren Lagerkomponenten, beispielsweise wenn sich der Innenring infolge wechselnder Lagerlast in Richtung des Außenringes bewegt und der Lagerspalt dadurch kleiner wird, wird die Dichtung verformt und zwar so, dass ein Teil der Dichtungsanordnung, beispielsweise die Oberseite, in Richtung Außenring gedrückt wird, während der unterseitige Teil der Dichtungsanordnung infolge der Fixierung an der Materialausbuchtung im Wesentlichen lagestabil bleibt. Dann entsteht infolge der Relativbewegung ein Moment im Dichtungsmaterial, das in etwa in einer gelenkartigen Bewegung um den Mittelpunkt des Verjüngungsbereiches resultiert. Aus diesem Grunde dient der Verjüngungs-bereich, beziehungsweise der Mittelpunkt des Verjüngungsbereiches, in etwa als eine Art federndes Gelenk. Durch dieses federnde Gelenk wird der Ausgleich von radialen Lageveränderungen der gegeneinander verdrehbaren Lagerkomponenten realisiert.

Nochmals zurückkommend auf den Verjüngungsbereich wird festgestellt, dass der Radius des Mittelpunktes dieses Verjüngungsbereiches bezogen auf die zentrale Achse der Drehverbindung kleiner sein kann ist als der Radius den die Fläche der äußere radiale Fläche der äußeren verdrehbaren Lagerkomponente (beispielsweise des Außenrings) mit der zentralen Achse der Drehverbindung hat. Der Radius des Mittelpunktes dieses Verjüngungsbereiches bezogen auf die zentrale Achse der Drehverbindung kann jedoch größer sein als der Radius, den die Fläche der inneren radialen Fläche der inneren verdrehbaren Lagerkomponente (beispielsweise des Innenrings) mit der zentralen Achse der Drehverbindung hat.

Der obere Verformraum kann in axialer Erstreckung in etwa durch die Ebene begrenzt werden, welche die axialen Fläche zur Begrenzung der äußeren Lagerkomponente im Raum definiert, also beispielsweise die horizontale Außenfläche des Außenrings. Der untere Verformraum kann axial ergo beispielsweise unterhalb dieser Ebene liegen.

Nochmals zurückkommend auf die Materialausbuchtung wird festgestellt, dass das Dichtungsmaterial die Materialausbuchtung, welche ein integraler Teil der Lagerkomponente verstanden wird in der die umlaufende Dichtung eingebracht ist (beispielsweise als integraler Teil des Außenrings) umfasst, ohne sich an der benachbarten Fläche abzustützen und ohne eine kraftschlüssige Verbindung mit einer radialen im Dichtbereich liegenden Dichtfläche einzugehen. Denn wie oben genannt wird die Fixierungswirkung maßgeblich dadurch bewirkt, dass die unterseitige, also lagerseitige, Fläche, als Gegenlager gegen axiales Herausdrücken (beispielsweise aufgrund von Fett/ Schmiermitteldruck) wirkt. Eine benachbarte radiale Fläche könnte demnach nicht gegenlagergemäß wirken.

In einer weiteren, bevorzugten Ausbildung der Erfindung weist die Lageranordnung die folgenden Merkmale auf:
- eine Drehverbringung mit wenigstens einem um eine Rotationsachse drehbaren Außenring sowie wenigstens einem um die genannte Rotationsachse drehbaren Innenring;
- einen Spalt, welcher zwischen dem Außenring und dem Innenring gebildet ist;
- wenigstens ein Dichtungselement, welches an oder in dem Spalt angeordnet ist und diesen umlaufend gegenüber der Umgebung im Wesentlichen flüssigkeitsdicht abdichtet;
- wobei der wenigstens eine Außenring und/oder der wenigstens eine Innenring wenigstens eine zumindest teilweise entlang eines Ringumfangs umlaufende Formung aufweisen, die zur lösbaren Befestigung des Dichtungselements ausgebildet ist;
- wobei das wenigstens eine Dichtungselement einen Querschnitt aufweist, dessen Form so ausgestaltet ist, dass das Dichtungselement mit der Formung des Außenrings und/oder Innenrings in im Wesentlichen formschlüssiger Verbindung ist.

Durch eine formschlüssige Verbindung des Dichtungselements mit der Lageranordnung werden keine Verbindungselemente zur Befestigung des Dichtungselements benötigt. Ferner ist ein sicherer Sitz des Dichtungselements auch gewährleistet, wenn die Drehverbindung betrieben wird. Dennoch kann das Dichtungselement bei der Wartung oder bei Beschädigung in einfacher Weise ausgetauscht werden.

In einer weiteren Ausgestaltung der Erfindung weist die Formung des Außenrings und/oder Innenrings einen Hinterschnitt auf und die Form des Querschnitts des Dichtungselements weist einen entsprechenden Hinterschnitt auf, so dass durch die Zusammenwirkung beider Hinterschnitte die formschlüssige Verbindung gebildet ist, insbesondere so, dass ein Lösen des Dichtungselements bei einem Überdruck im Innern des Spaltes verhindert ist.

Derart ist in günstiger Weise eine formschlüssige Verbindung zwischen Dichtungselement und wenigstens einem der Ringe der Lageranordnung geschaffen, so dass der Spalt in Wirkrichtung des Überdrucks gut abgedichtet ist. Die Gestaltung der Formungen als Hinterschnitte hat zur Folge, dass die Verbindung in Folge des Formschlusses bei steigendem Druck eine gesteigerte Dichtigkeit aufweist.

In einer weiteren Ausführung der Erfindung weist der Querschnitt des Dichtungselements wenigstens zwei Dichtlippen auf, die derart an einer Anlagefläche des Außenrings und/oder Innenrings anliegen, dass eine Labyrinthdichtung gebildet ist, insbesondere so dass die Dichtwirkung des Dichtungselements gegenüber dem Spalt gewährleistet ist, wenn Außenring und Innenring relativ zu einander bewegt sind .

Durch die Anformung zweier Dichtlippen kann in vorteilhafter Weise eine Labyrinthwirkung gebildet sein, die auch als schleifende Dichtung bei gegeneinander bewegten Ringen eine gute Dichtwirkung erzielt.

In einer weiteren Ausbildung der Erfindung weisen Außenring und/oder Innenring einen Einstich oder eine Aussparung auf in den ein, insbesondere widerhakenförmiges, Fixierteil des Dichtungselements eingreift, so dass die formschlüssige Verbindung zwischen Dichtungselement und Innenring und/oder Außenring zusätzlich gesichert ist.

Ein zusätzliches Fixierteil bietet den Vorteil, dass die formschlüssige Verbindung beispielsweise durch zwei zangenförmig angeordnete Strukturen an dem Außenring und/oder Innenring festgelegt werden kann. Dadurch wird die formschlüssige Verbindung noch verbessert. Außerdem kann die zusätzliche Sicherung des Dichtungselements in einem in einfacher Weise zu fertigenden Einstich oder einer Aussparung vorgesehen werden.

Entsprechend den oben beschriebenen Merkmalen ist die Fixierung in der Drehverbindung bzw. dem Wälzlager sowie die Lagestabilität der umfassenden Dichtungsanordnung, nebst anderen Vorteilen, wesentlich verbessert gegenüber dem aktuell vorhandenen Lösungen des Standes der Technik.

Weitere Merkmale, Eigenschaften, Vorteile und Wirkungen auf der Grundlage der Erfindung ergeben sich aus den folgenden Beschreibungen einer bevorzugten Ausführungsform der Erfindung, sowie weiteren vorteilhaften Ausgestaltungen der Erfindung, sowie anhand der Zeichnungen ersichtlich ist. Hierbei zeigen:

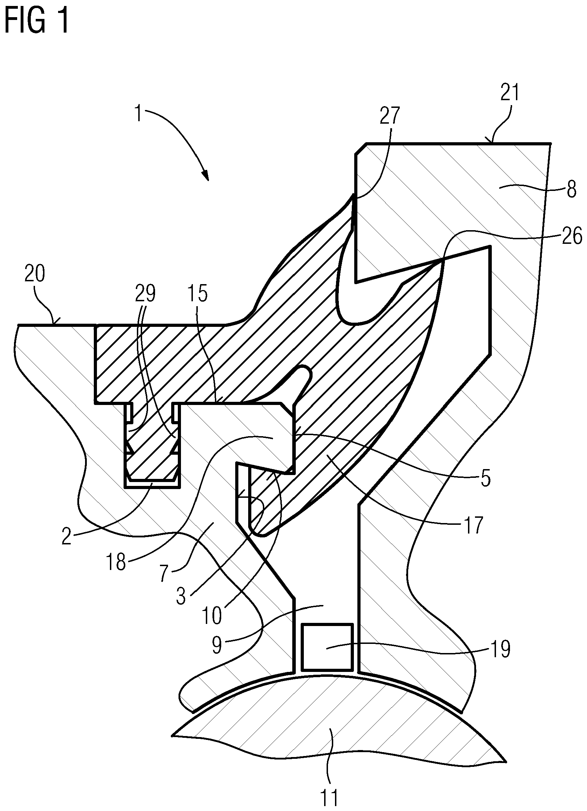

Fig. 1 einen erste Betrachtung der Schnittgeometrie einer einteiligen Ausführung dieser Dichtungsanordnung 1 bei Betrachtung der Stirnschnittfläche eines geschnittenen Segmentes; es handelt sich um einen Schnitt durch eine Drehverbindung 1, die Kugel-, Rollen-, Kegel-, Tonnen- förmige Wälzkörper 11 oder gleitende Komponenten verwenden kann, oder eine Hybridform von all diesem. Die Dichtunganordnung ist fixiert durch den Einstich 2, und durch die Materialausbuchtung 18 an der einen Lagerkomponente und ist fixiert durch die Anlage der oberen Dichtlippen 26; 27 an der gegenüberliegenden Lagerkomponente.

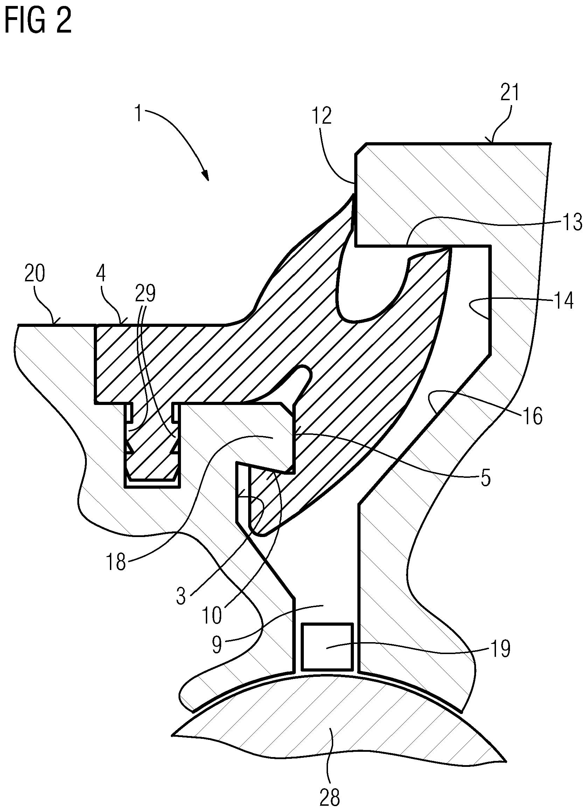

Fig. 2 eine weiteres Ausführungsbeispiel dieser Schnittgeometrie dieser einteiligen Ausführung dieser Dichtungsanordnung 1, wobei die Konturen, vor Allem den Dichtungsraum 24 betreffend aufgrund der nicht mehr schrägen Fläche 13 leicht verändert ist im Gegensatz zu Fig.1.

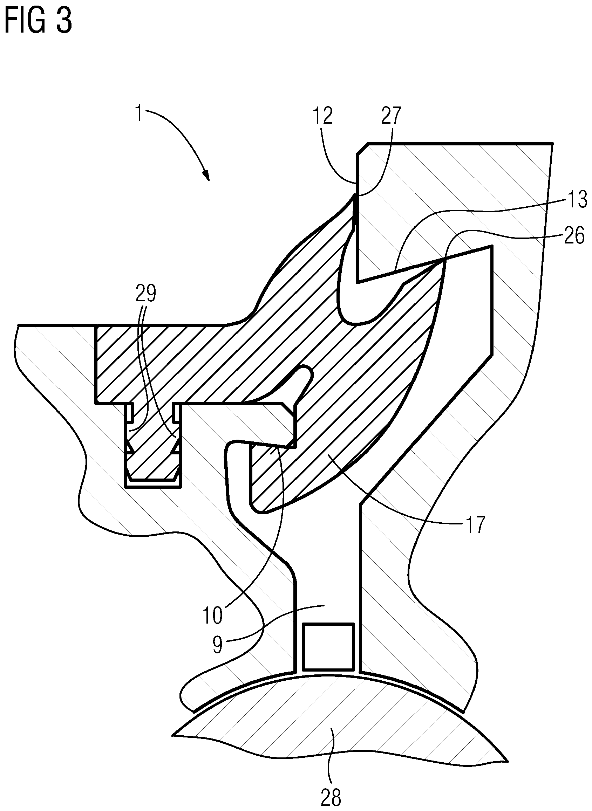

Fig. 3 zeigt eine Variation der Flächen, die die Dichtungsanordnung 1 im Bereich der Materialausbuchtung beziehungsweise des Materialhinterschnitts 18 begrenzen. Insbesondere zeigt sich, dass die erfindungsgemäße Anordnung nicht von lotrechten oder geraden Flächen 3; 5 abhängig ist, sondern auch bei Hybridformen ihre Wirkung entfalten kann.

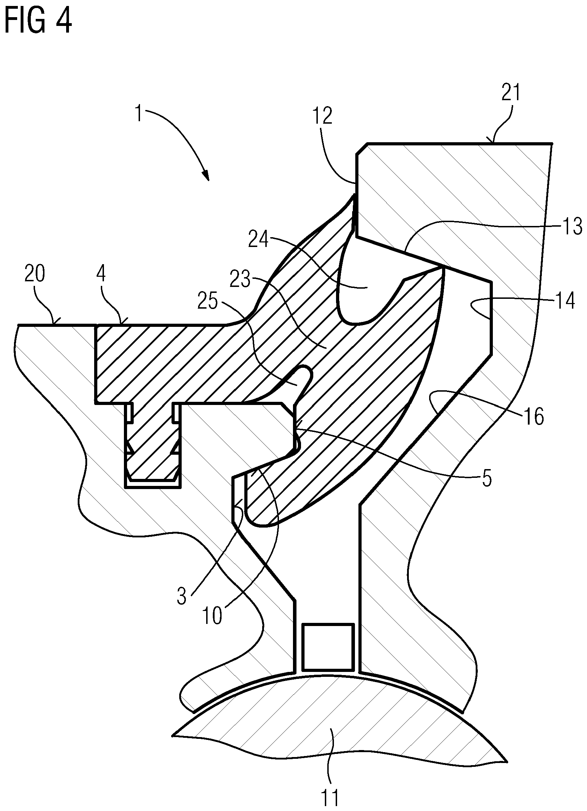

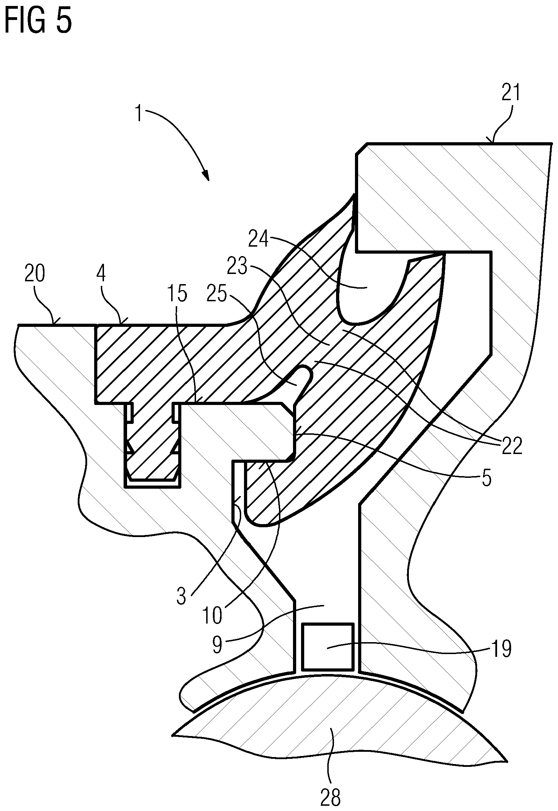

Fig. 4 hingegen zeigt wiederum eine andere Variation der den Dichtungsraum begrenzenden, in der Nähe der Dichtungsanordnung 1 liegenden Flächen 13; 14; 3; 5, die wie oben gesagt auch schräg verlaufen können. Auch die Fläche 15, auf die die Dichtungsanordnung 1 "aufliegt", kann als Schräge ausgestaltet sein.

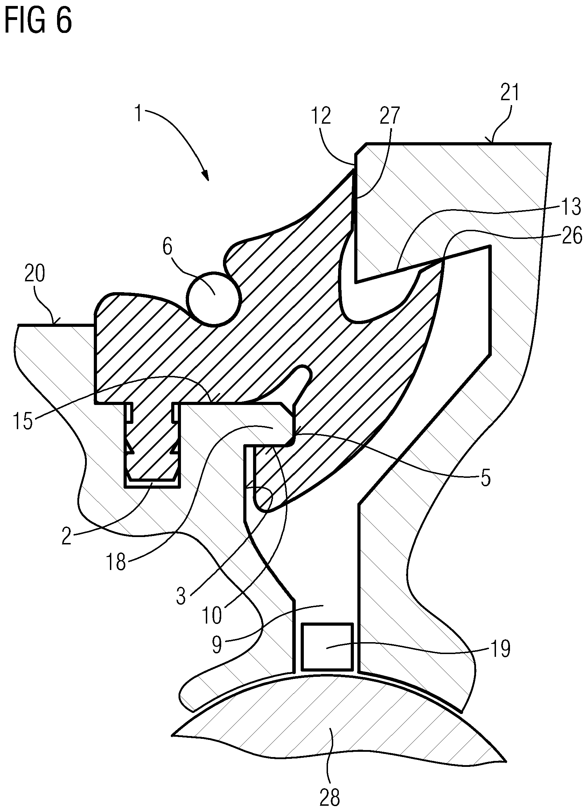

In allen Figuren Fig. 1 bis einschließlich Fig. 6 ist erkennbar, dass die Dichtungsanordnung formschlüssig an einer der beiden Lagerkomponenten 7, beispielsweise am Außenring, in einen Einstich 2 eingebracht ist, und dass stets zusätzlich zu dieser Einbringung die Umfassung einer Materialausbuchtung 18, beziehungsweise eines Materialhinterschnitts, vorliegt, wobei die Materialausbuchtung ein integraler Bestandteil der Lagerkomponente ist. Es wäre in einer weiteren vorteilhaften Ausgestaltung beispielsweise auch denkbar, dass die Materialausbuchtung durch einen zusätzlichen und separat eingebrachten Körper realisiert wird, der an der Lagerkomponente eingebracht wird. Im vorliegenden Beispiel ist jedoch die Materialausbuchtung beispielsweise durch das Fertigungsverfahren Drehen in die Lagerkomponente, beispielsweise den Außenring 7, eingebracht worden. Charakteristisch ist, wie in allen Figuren Fig. 1 bis einschließlich Fig. 6 leicht erkennbar, dass die Materialausbuchtung in den Dichtungsraum hineinragen kann.

In einer weiteren vorteilhaften Ausgestaltung ist die äußere Fläche 5 dieser Materialausbuchtung 18 sogar erhaben gegenüber den Flächen, die den Spalt an der Stelle des Dichtungsraumes 9 begrenzen, so dass die Materialausbuchtung 18 definitiv in den Lagerspalt hineinragen kann. Dadurch könnte eine noch größere Fläche 10 gebildet werden.

Somit wäre die Gegenkraft beziehungsweise der Gegendruck gegen axiales Herausdrücken der Dichtung, noch stärker und die Fixierungswirkung noch höher. Die Materialausbuchtung 18 kann auch so gestaltet sein, dass sie kleine Dimensionen relativ zu den Dimensionen des abzudichtenden Innenraums 9 aufweist. Hierdurch kann beispielsweise der Montagevorgang vereinfacht sein. Allgemein gesagt soll die Dimensionierung der Material-ausbuchtung 18 so gestaltet sein, dass die Dichtungsanordnung einfach und sicher montiert werden kann und andererseits die Materialausbuchtung 18 so gestaltet ist, dass eine sehr gute Fixierungswirkung gewährleistet ist.

In allen Figuren Fig. 1 bis einschließlich Fig. 6 ist gut erkennbar, wie die widerhakenförmigen Teile der Dichtungsanordnung 1 ausgestaltet sind, sodass die form- und kraftschlüssige Fixierung der Anordnung 1 im Einstich 2 realisiert wird. Zu beachten ist, dass die Dichtung 1 beispielsweise durch manuelles Eindrücken in den Einstich 2 eingebracht wird, auf manuelle Weise auch wieder herausnehmbar ist, und somit i m Feld, beispielsweise während der Instandsetzung, durch ei ne neue Dichtungsanordnung 1 gleicher oder ähnlicher Machart ersetzt werden kann. Es ist denkbar, dass in zukünftigen Ausgestaltungen das Einbringen durch ein spezielles Montageverfahren auch automatisiert geschehen kann. In allen Figuren, insbesondere Fig. 3, ist der lagerseitige Dichtungsbereich gut erkennbar, der bogenförmig den an den abzudichtenden Raum 9 von der Umgebung außerhalb des Lagerspaltes, in dem die Dichtung eingesetzt ist, abtrennt.

### Bezugszeichen liste

1 Dichtungsanordnung
2 Einstich
3 äußere radiale Fläche der einen verdrehbaren Lagerkomponente
4 Oberkante der Dichtungsanordnung
5 In radialer Richtung begrenzende Fläche der Materialausbuchtung der einen verdrehbaren Lagerkomponente
6 Zugfederstrang (optional)
7 Erste verdrehbare Lagerkomponente, z.B.: Außenring
8 Zweite verdrehbare Lagerkomponente, z.B.: Innenring
9 abzudichtender Dichtraum
10 untere, lagerseitige, Fläche der Materialausbuchtung (Hinterschnitt)
11 Teil eines Wälzkörpers der Drehverbindung
12 äußere radiale Fläche der zweiten verdrehbaren Lagerkomponente
13 horizontale Fläche der zweiten verdrehbaren Lagerkomponente
14 innere radiale Fläche der zweiten verdrehbaren Lagerkomponente
15 horizontaler Flächenabschnitt, auf den die Dichtungsanordnung an der einen verdrehbaren Lagerkomponente anliegt
16 vertikaler Flächenabschnitt, an den die Dichtungsanordnung an der zweiten verdrehbaren Lagerkomponente anliegt
17 lagerseitiger Dichtungsbereich der Dichtungsanordnung
18 hervorstehende Materialausbuchtung als integraler Teil der einen verdrehbaren Lagerkomponente
19 Teil eines Käfigelementes der Drehverbindung (optional)
20 Horizontale Außenfläche der ersten verdrehbaren Lagerkomponente
21 Horizontale Außenfläche der zweiten verdrehbaren Lagerkomponente
22 Verjüngungsbereich der Dichtungsanordnung
23 Mittelpunkt des Verjüngungsbereiches der Dichtungsanordnung
24 oberer Verformraum
25 unterer Verformraum
26 obere Dichtlippe anliegend an der zweiten verdrehbaren Lagerkomponente
27 obere Dichtlippe anliegend an der zweiten verdrehbaren Lagerkomponente
28 Teil eines Wälzkörpers der Drehverbindung (Rollen, Kugel, Zylinder, Tonnen)
29 widerhakenförmiger Fixierteil (zur Einbringung der Dichtungsanordnung in die Lagerkomponente)

## Patentansprüche

1. Lageranordnung aufweisend eine Dichtungsanordnung (1) aus einem, insbesondere einteiligen, umlaufenden und/oder elastomeren, vorzugsweise kautschukartigen Dichtungsmaterial zur Abdichtung des Dichtraumes (9) beinhaltend einen lagerseitigen Dichtungsbereich (17) und eingesetzt zwischen mindestens einem Außenring oder einer äußeren verdrehbaren Lagerkomponente (7) und mindestens einem um die gleiche Zentralachse gegeneinander verdrehbaren und durch einen Spalt (9) getrennten Innenring oder einer inneren verdrehbaren Lagerkomponente (8) einer Drehverbindung, wobei die Dichtungsanordnung lösbar und wieder austauschbar form- und kraftschlüssig verbunden ist mit einer Struktur, insbesondere einem zu einer horizontalen Außenfläche (20) der ersten verdrehbaren Lagerkomponente parallelen Fläche eingebrachten Einstich (2), sowie einer hervorstehenden Materialausbuchtung (18) mit einer unteren, lagerseitigen Fläche (10) als integraler Teil dieser ersten, äußeren oder inneren verdrehbaren Lagerkomponente (7), umfassend die folgenden Elemente:
eine Oberkante (4) der Dichtungsanordnung (1);
zwei obere Dichtlippen (26, 27);
einen oberen Verformraum (24) als Aussparung des Dichtungsmaterials; den lagerseitigen Dichtungsbereich (17);
ein widerhakenförmiges Fixierteil (29) zur Einbringung der Dichtung in die Lagerkomponente (7);
einen an einer unteren, lagerseitigen Fläche (10) der Materialausbuchtung (18) anliegenden Bereich der Dichtungsanordnung (1);
einen unteren Verformraum (25) als Aussparung des Dichtungsmaterials;
**dadurch gekennzeichnet, dass**
a) die Oberkante (4) der Dichtungsanordnung (1) in etwa bündig mit der horizontalen Außenfläche (20) der ersten verdrehbaren Lagerkomponente (7) abschließt, in der die Materialausbuchtung (18) der Dichtungsanordnung (1) vorhanden ist; wobei
b) alle Berührpunkte oder -flächen der beiden oberen Dichtlippen (26, 27) an der gegenüber liegenden zweiten verdrehbaren Lagerkomponente (8) oberhalb der horizontalen Außenfläche (20) der ersten verdrehbaren Lagerkomponente (7) liegen;
c) der lagerseitige Dichtungsbereich (17) den an den abzudichtenden Raum (9) von der Umgebung außerhalb des Spaltes (9), in dem die Dichtungsanordnung (1) eingesetzt ist, bogenförmig abtrennt; und
d) die Materialausbuchtung (18) eine in den abzudichtenden Raum (9) hineinragende Geometrie hat, an deren unteren, lagerseitigen Fläche (10) sich die Dichtungsanordnung (1) festkrallt, wobei die Materialausbuchtung (18) in Richtung des Lagermittelpunktes hineinragt und von der Dichtungsanordnung (1) an der unteren, lagerseitigen Fläche (10) umfasst wird.

2. Lageranordnung nach Anspruch 1, **dadurch gekennzeichnet, dass** die Dichtungsanordnung (1) flächig, insbesondere nicht punktförmig an dieser unteren, lagerseitigen Fläche (10) der Materialausbuchtung (18) anliegt.

3. Lageranordnung nach einem der vorhergehenden Ansprüche, **dadurch gekennzeichnet, dass** die Materialausbuchtung (18) in radialer Richtung durch eine Fläche (5) begrenzt wird, die gegenüber den den Dichtungsraum (9) begrenzenden Flächen der äußeren oder inneren verdrehbaren Lagerkomponente (7; 8) in Richtung der gegenüberliegenden verdrehbaren Lagerkomponente hervorspringt.

4. Lageranordnung nach einem der vorhergehenden Ansprüche, **dadurch gekennzeichnet, dass** die Dichtungsanordnung durch Anlegung an Flächen (5; 10) an der äußeren verdrehbaren Lagerkomponente (7) und Flächen (12; 13) an der inneren verdrehbaren Lagerkomponente (8) weitere Stabilisierung der Lage zwischen den Lagerkomponenten (7; 8) erhält.

5. Lageranordnung nach einem der vorhergehenden Ansprüche, **dadurch gekennzeichnet, dass** zwei Dichtlippen (26; 27) vorgesehen sind, die eine unterschiedliche Breite aufweisen, so dass die Flächen der gegenüberliegenden, zweiten, verdrehbaren Lagerkomponente im Wesentlichen vollständig berührt werden.

6. Lageranordnung nach einem der vorhergehenden Ansprüche, **dadurch gekennzeichnet, dass** zusätzlich zum einteiligen kautschukartigen Material der Dichtungsanordnung mindestens ein umlaufendes Ringelement in Form eines Zugfederstranges (6) an der Oberkante (4) der Dichtungsanordnung (1) eingebracht ist.

7. Lageranordnung nach einem der vorhergehenden Ansprüche, **dadurch gekennzeichnet, dass** die Lage der Dichtungsanordnung über mindestens eine zusätzliche Schraub- oder Nietverbindung, eingebracht in derjenigen verdrehbaren Lagerkomponente (7; 8), in der die Materialausbuchtung (18) der Dichtungsanordnung (1) vorhanden ist, verfügt, welche zur Niederhaltung der Oberkante (4) der Dichtungsanordnung (1) dient.

8. Lageranordnung nach Anspruch 8 **gekennzeichnet dadurch, dass** die Nut oder der Einstich (2) in einer der Lagerkomponenten (7; 8) sowie der geometrisch ähnliche und zugehörige widerhakenförmige Fixierteil der Dichtungsanordnung (29) entfallen können, wenn die mindestens eine Schraub- oder Nietverbindung vorhanden ist.

9. Lageranordnung nach einem der vorhergehenden Ansprüche, **dadurch gekennzeichnet, dass** mindestens eine der Flächen oder Kanten (12; 13; 14; 10; 3; 5; 15; 16), die den Bereich der Dichtungsanordnung (1) oder den Einstich (2) begrenzen, sowie die äußersten Flächen (20; 21) der verdrehbaren Lagerkomponenten (7; 8) nichtmetallisch oder metallisch beschichtet sind.

10. Lageranordnung nach einem der vorhergehenden Ansprüche, **dadurch gekennzeichnet, dass** mindestens eine der Flächen oder Kanten (12; 13 ;14; 10; 3; 5; 15; 16), die den Bereich der Dichtungsanordnung (1) oder den Einstich (2) begrenzen, jeweils als schräge oder abgeschrägte Flächen ausgeführt sind.

11. Lageranordnung mit wenigstens einer Dichtungsanordnung (1) nach einem der Ansprüche 1 bis 10, aufweisend:
eine Drehverbindung mit wenigstens einem um eine Rotationsachse drehbaren Außenring (7) sowie wenigstens einem um die genannte Rotationsachse drehbaren Innenring (8);
einen Spalt (9), welcher zwischen dem Außenring (7) und dem Innenring (8) gebildet ist;
wobei wenigstens ein Dichtungselement der Dichtungsanordnung (1) an oder in dem Spalt (9) angeordnet ist und diesen umlaufend gegenüber der Umgebung im Wesentlichen flüssigkeitsdicht abdichtet;
wobei der wenigstens eine Außenring (7) und/oder der wenigstens eine Innenring (8) wenigstens eine zumindest teilweise entlang eines Ringumfangs umlaufende Formung (18) aufweisen, die zur lösbaren Befestigung des Dichtungselements ausgebildet ist;
wobei das wenigstens eine Dichtungselement einen Querschnitt aufweist, dessen Form so ausgestaltet ist, dass das Dichtungselement mit der Formung (18) des Außenrings (7) und/oder Innenrings (8) in im Wesentlichen formschlüssiger Verbindung ist.

12. Lageranordnung nach Anspruch 11, **dadurch gekennzeichnet, dass** die Formung des Außenrings (7) und/oder Innenrings (8) einen Hinterschnitt (10) aufweist und die Form des Querschnitts des Dichtungselements einen entsprechenden Hinterschnitt aufweist, so dass durch die Zusammenwirkung beider Hinterschnitte die im Wesentlichen formschlüssige Verbindung gebildet ist.

13. Lageranordnung nach einem der Ansprüche 11 oder 12, **dadurch gekennzeichnet, dass** der Querschnitt des Dichtungselements wenigstens zwei Dichtlippen (26, 27) aufweist, die derart an einer Anlagefläche des Außenrings und/oder Innenrings anliegen, dass eine Labyrinthdichtung gebildet ist, insbesondere so dass die Dichtwirkung des Dichtungselements gegenüber dem Spalt (9) gewährleistet ist, wenn Außenring (7) und Innenring (8) relativ zueinander bewegt sind.

14. Lageranordnung nach einem der Ansprüche 11 bis 13, **dadurch gekennzeichnet, dass** Außenring (7) und/oder Innenring (8) einen Einstich (2) oder eine Aussparung aufweisen in den ein, insbesondere widerhakenförmiges, Fixierteil (29) des Dichtungselements eingreift, so dass die im Wesentlichen formschlüssige Verbindung zwischen Dichtungselement und Innenring (8) und/oder Außenring (7) zusätzlich gesichert ist.

## Claims

1. A bearing arrangement having a sealing arrangement (1) made of, in particular a one-piece, circumferential and/or elastomeric, preferably rubber-like sealing material for sealing the sealing space (9), comprising a bearing-sided sealing region (17) and inserted between at least one outer ring or an outer rotatable bearing component (7) and at least one inner ring or an inner rotatable bearing component (8) of a rotary connection which is rotatable relative to one another about the same central axis and separated by a gap (9), wherein the sealing arrangement is releasably and again exchangeably positively and force-lockingly connected to a structure, in particular to a puncture inserted rotatable to a horizontal outer surface (20) of the first rotatable bearing component's parallel surface, as well as to a projecting material bulge (19) with a lower, bearing-sided surface (10) as an integral part of said first outer or inner rotatable bearing component (7), comprising the following elements:
an upper edge (4) of the seal assembly (1);
two upper sealing lips (26, 27);
an upper deformation space (24) as recessing of the sealing material;
the bearing sided sealing region (17);
a barb-shaped fixing member (29) for introducing the seal into the bearing component (7);
a region of the sealing arrangement (1) resting against a lower, bearing-sided surface (10) of the material bulge (18);
a lower deformation space (25) as a recess of the sealing material;
**characterized in that**
a) the upper edge (4) of the sealing arrangement (1) closes approximately flush with the horizontal outer surface (20) of the first rotatable bearing component (7) in which the material bulge (18) of the sealing arrangement (1) is present; wherein
b) all contact points or surfaces of the two upper sealing lips (26, 27) are located on the second rotatable bearing component (8) located opposite and above the horizontal outer surface (20; 21) of the first rotatable bearing component (7);
c) the seal region (17) on the bearing side separates the space (9) to be sealed from the surrounding outside the gap (9) in which the seal arrangement (1) is inserted in a board-like manner; and
d) the material bulge (18) has a geometry which projects into the space (9) to be sealed, the lower surface (10) of which on the bearing side engages with the sealing arrangement (1), the material bulge (18) projecting in the direction of the bearing centre and being enclosed by the sealing arrangement (1) on the lower surface (10) on the bearing side.

2. The bearing arrangement according to claim 1, **characterized in that** the sealing arrangement (1) abuts flatly, in particular not point-shaped, against this lower, bearing-sided surface (10) of the material bulge (18).

3. The bearing arrangement according to one of the preceding claims, **characterized in that** the material recess (18) is limited in the radial direction by a surface (5) which projects in the direction of the opposite rotatable bearing component in relation to the surfaces of the outer or inner rotatable bearing component (7; 8) limiting the sealing space (9).

4. The bearing arrangement according to one of the preceding claims, **characterized in that** the sealing arrangement obtains further stabilization of the position between the bearing components (7; 8) by abutting against surfaces (5; 10) on the outer rotatable bearing component (7) and surfaces (12; 13) on the inner rotatable bearing component (8).

5. The bearing arrangement according to one of the preceding claims, **characterized in that** two sealing lips (26; 27) are provided which have a different width so that the surfaces of the opposite, second, rotatable bearing component are substantially completely contacted.

6. The bearing arrangement according to one of the preceding claims, **characterized in that**, in addition to the one-piece rubber-like material of the sealing arrangement, at least one circumferential ring element in the form of a tension spring strand (6) is introduced at the upper edge (4) of the sealing arrangement (1).

7. The bearing arrangement according to one of the preceding claims, **characterized in that** the position of the sealing arrangement has at least one additional screw or rivet connection, introduced into that rotatable bearing component (7; 8) in which the material bulge (18) of the sealing arrangement (1) is present, which serves to hold down the upper edge (4) of the sealing arrangement (1).

8. The bearing arrangement according to one of the preceding claims, **characterized in that** the groove or puncture (2) in one of the bearing components (7; 8) and the geometrically similar and associated barb-shaped fixing part of the sealing arrangement (29) can be omitted if the at least one screw or rivet connection is present.

9. The bearing arrangement according to one of the preceding claims, **characterized in that** at least one of the surfaces or edges (12; 13; 14; 10; 3; 5; 15; 16) which limit the region of the sealing arrangement (1) or the puncture (2) and the outermost surfaces (20; 21) of the rotatable bearing components (7; 8) are non-metallically or metallically coated.

10. The bearing arrangement according to one of the preceding claims, **characterized in that** at least one of the surfaces or edges (12; 13; 14; 10; 3; 5; 15; 16) which limit the region of the sealing arrangement (1) or the puncture (2) is in each case designed as inclined or bevelled surfaces.

11. A bearing arrangement with at least one sealing arrangement (1) according to one of claims 1 to 10, having:
a rotary joint having at least one outer ring (7) rotatable about an axis of rotation and at least one inner ring (8) rotatable about said axis of rotation;
a gap (9) formed between said outer ring (7) and said inner ring (8);
at least one sealing element of the sealing arrangement (1) being arranged at or in the gap (9) and sealing the latter circumferentially with respect to the environment in a substantially liquid-tight manner;
the at least one outer ring (7) and/or the at least one inner ring (8) having at least one moulding (18) which runs at least partially around a circumference of the ring and is designed for releasably fastening the sealing element;
the at least one sealing element having a cross-section whose shape is designed such that the sealing element is in substantially positive connection with the shaping (18) of the outer ring (7) and/or inner ring (8).

12. The bearing arrangement according to claim 11, **characterized in that** the shaping of the outer ring (7) and/or inner ring (8) has an undercut (10) and the shape of the cross-section of the sealing element has a corresponding undercut, so that the substantially positive connection is formed by the interaction of the two undercuts.

13. The bearing arrangement according to claim 11 or 12, **characterized in that** the cross-section of the sealing element has at least two sealing lips (26, 27) which abut against a bearing surface of the outer ring and/or inner ring such that a labyrinth seal is formed, in particular such that the sealing effect of the sealing element with respect to the gap (9) is ensured when the outer ring (7) and inner ring (8) are moved relative to one another.

14. The bearing arrangement according to one of claims 11 to 13, **characterized in that** outer ring (7) and/or inner ring (8) have a puncture (2) or a recess in which a fixing part (29), in particular a barb-shaped fixing part, of the sealing element engages, so that the substantially positive connection between sealing element and inner ring (8) and/or outer ring (7) is additionally secured.

## Revendications

1. Ensemble palier comprenant un ensemble d'étanchéité (1) constitué d'un matériau d'étanchéité, en particulier d'une seule pièce, périphérique et/ou élastomère, de préférence caoutchouteux, pour étanchéifier l'espace étanche (9), comportant une zone d'étanchéité côté palier (17) et inséré entre au moins une bague extérieure ou un composant de palier rotatif extérieur (7) et au moins une bague intérieure ou un composant de palier rotatif intérieur (8) d'une liaison tournante, qui peuvent tourner l'un par rapport à l'autre autour du même axe central et sont séparés par une fente (9), l'ensemble d'étanchéité étant relié de manière amovible et interchangeable par complémentarité de forme et à force à une structure, en particulier une entaille (2) réalisée dans une surface parallèle à une surface extérieure horizontale (20) du premier composant de palier rotatif et à un renflement de matériau en saillie (18) avec une surface inférieure côté palier (10) faisant partie intégrante dudit premier composant de palier rotatif extérieur ou intérieur (7), comprenant les éléments suivants :
un bord supérieur (4) de l'ensemble d'étanchéité (1) ;
deux lèvres d'étanchéité supérieures (26, 27) ;
un espace de déformation supérieur (24) sous la forme d'un évidement du matériau d'étanchéité ;
la zone d'étanchéité côté palier (17) ;
un élément de fixation en forme de barbillon (29) pour introduire le joint dans le composant de palier (7) ;
une zone de l'ensemble d'étanchéité (1) s'appliquant contre une surface inférieure côté palier (10) du renflement de matériau (18) ;
un espace de déformation inférieur (25) sous la forme d'un évidement du matériau d'étanchéité ;
**caractérisé en ce que**
a) le bord supérieur (4) de l'ensemble d'étanchéité (1) se termine à peu près au niveau de la surface extérieure horizontale du premier composant de palier rotatif (7) dans lequel le renflement de matériau (18) de l'ensemble d'étanchéité (1) est présent ;
b) tous les points ou surfaces de contact des deux lèvres d'étanchéité supérieures (26, 27) avec le deuxième composant de palier rotatif opposé (8) sont situés au-dessus de la surface extérieure horizontale (20) du premier composant de palier rotatif (7) ;
c) la zone d'étanchéité côté palier (17) sépare en forme d'arc l'espace à étanchéifier (9) de l'environnement à l'extérieur de la fente (9) dans laquelle l'ensemble d'étanchéité (1) est inséré ; et
d) le renflement de matériau (18) possède une géométrie qui fait saillie dans l'espace à étanchéifier (9), à la surface inférieure côté palier (10) de laquelle l'ensemble d'étanchéité (1) s'accroche, le renflement de matériau (18) faisant saillie en direction du centre de palier et étant entouré par l'ensemble d'étanchéité (1) sur la surface inférieure côté palier (10).

2. Ensemble palier selon la revendication 1, **caractérisé en ce que** l'ensemble d'étanchéité (1) s'applique à plat, en particulier de manière non ponctuelle, contre cette surface inférieure côté palier (10) du renflement de matériau (18).

3. Ensemble palier selon l'une des revendications précédentes, **caractérisé en ce que** le renflement de matériau (18) est délimité dans la direction radiale par une surface (5) qui fait saillie dans la direction du composant de palier rotatif opposé par rapport aux surfaces du composant de palier rotatif extérieur ou intérieur (7 ; 8) qui délimitent l'espace étanche (9).

4. Ensemble palier selon l'une des revendications précédentes, **caractérisé en ce que** l'ensemble d'étanchéité obtient une stabilisation supplémentaire de sa position entre les composants de palier (7 ; 8) par appui contre des surfaces (5 ; 10) du composant de palier rotatif extérieur (7) et des surfaces (12 ; 13) du composant de palier rotatif intérieur (8).

5. Ensemble palier selon l'une des revendications précédentes, **caractérisé en ce qu'**il est prévu deux lèvres d'étanchéité (26 ; 27) qui présentent une largeur différente, de sorte que le contact avec les surfaces du deuxième composant de palier rotatif opposé est sensiblement complet.

6. Ensemble palier selon l'une des revendications précédentes, **caractérisé en ce que**, en plus du matériau caoutchouteux d'une seule pièce de l'ensemble d'étanchéité, au moins un élément annulaire périphérique sous la forme d'un brin de ressort de traction (6) est introduit sur le bord supérieur (4) de l'ensemble d'étanchéité (1).

7. Ensemble palier selon l'une des revendications précédentes, **caractérisé en ce que** la position de l'ensemble d'étanchéité dispose d'au moins une liaison supplémentaire par vis ou rivet, introduite dans le composant de palier rotatif (7 ; 8) dans lequel se trouve le renflement de matériau (18) de l'ensemble d'étanchéité (1), laquelle sert à maintenir le bord supérieur (4) de l'ensemble d'étanchéité (1).

8. Ensemble palier selon la revendication 8, **caractérisé en ce que** la rainure ou l'entaille (2) dans l'un des composants de palier (7 ; 8) ainsi que la partie de fixation de géométrique similaire et en forme de barbillon associée de l'ensemble d'étanchéité (29) peuvent être supprimées si ladite au moins une liaison par vis ou rivet est présente.

9. Ensemble palier selon l'une des revendications précédentes, **caractérisé en ce qu'**au moins l'une des surfaces ou l'un des bords (12 ; 13 ; 14 ; 10 ; 3 ; 5 ; 15 ; 16) qui délimitent la zone de l'ensemble d'étanchéité (1) ou l'entaille (2) ainsi que les surfaces extérieures (20 ; 21) des composants de palier rotatifs (7 ; 8) sont pourvus d'un revêtement non métallique ou métallique.

10. Ensemble palier selon l'une des revendications précédentes, **caractérisé en ce qu'**au moins l'une des surfaces ou l'un des bords (12 ; 13 ; 14 ; 10 ; 3 ; 5 ; 15 ; 16) qui délimitent la zone de l'ensemble d'étanchéité (1) ou l'entaille (2) sont réalisés sous la forme de surfaces inclinées ou chanfreinées.

11. Ensemble palier comportant au moins un ensemble d'étanchéité (1) selon l'une des revendications 1 à 10, comprenant :
une liaison tournante comportant au moins une bague extérieure (7) pouvant tourner autour d'un axe de rotation et au moins une bague intérieure (8) pouvant tourner autour dudit axe de rotation ;
une fente (9) formée entre la bague extérieure (7) et la bague intérieure (8) ;
dans lequel au moins un élément d'étanchéité de l'ensemble d'étanchéité (1) est disposé sur ou dans la fente (9) et rend celle-ci sensiblement étanche aux liquides de manière périphérique par rapport à l'environnement ;
dans lequel ladite au moins une bague extérieure (7) et/ou ladite au moins une bague intérieure (8) présentent au moins une formation (18) qui s'étend au moins partiellement le long d'une circonférence de bague et est conçue pour fixer de manière amovible l'élément d'étanchéité ;
dans laquelle ledit au moins un élément d'étanchéité présente une section transversale dont la forme est conçue de telle sorte que l'élément d'étanchéité est en liaison sensiblement par complémentarité de forme avec la formation (18) de la bague extérieure (7) et/ou la bague intérieure (8).

12. Ensemble palier selon la revendication 11, **caractérisé en ce que** la formation de la bague extérieure (7) et/ou de la bague intérieure (8) présente une contre-dépouille (10) et la forme de la section transversale de l'élément d'étanchéité présente une contre-dépouille correspondante, de sorte que la liaison sensiblement par complémentarité de forme est formée par la coopération des deux contre-dépouilles.

13. Ensemble palier selon l'une des revendications 11 ou 12, **caractérisé en ce que** la section transversale de l'élément d'étanchéité présente au moins deux lèvres d'étanchéité (26, 27) qui s'appliquent contre une surface d'appui de la bague extérieure et/ou de la bague intérieure de sorte qu'un joint labyrinthe est formé, en particulier de sorte que l'effet d'étanchéité de l'élément d'étanchéité par rapport à la fente (9) est assuré lorsque la bague extérieure (7) et la bague intérieure (8) sont déplacées l'une par rapport à l'autre.

14. Ensemble palier selon l'une des revendications 11 à 13, **caractérisé en ce que** la bague extérieure (7) et/ou la bague intérieure (8) présentent une entaille (2) ou un évidement dans lequel s'engage une partie de fixation (29), en particulier en forme de barbillon, de l'élément d'étanchéité, de sorte que la liaison sensiblement par complémentarité de forme entre l'élément d'étanchéité et la bague intérieure (8) et/ou la bague extérieure (7) est assurée de façon supplémentaire.
